# EUROPÄISCHE PATENTANMELDUNG

(11) **EP 2 314 184 A2**
(43) Veröffentlichungstag der Anmeldung: **27.04.2011**
(21) Anmeldenummer: 10012044.3
(22) Anmeldetag: 30.09.2010
(51) Int. Cl.: A47J 31/40

(54) **Instantpulverfördervorrichtung eines Getränkezubereitungsgeräts**

(30) Priorität: 21.10.2009 DE 202009014256 U
(71) Anmelder: Eugster/Frismag AG, 8580 Amriswil (CH)
(72) Erfinder: Pano, Giovanni, 9323 Steinach (CH); Henke, Jörg, 8280 Kreuzlingen (CH)
(74) Vertreter: Schubert, Siegmar

(57) **Zusammenfassung**

Eine Instantpulverfördervorrichtung eines Getränkezubereitungsgeräts umfasst eine in einem Bodenbereich des Instantpulverbehälters (2) drehbar angeordnete Draht-Förderspindel (7), an deren Ende eine Auslauföffnung (4) angeordnet ist, sowie Mittel zum Auflockern des Instantpulvers in dem Instantpulverbehälter (2). In dem Instantpulverbehälter (2) ist mindestens ein Schlagelement (14, 16) in axialer Richtung der Draht-Förderspindel (7) elastisch verstellbar und in die Draht-Förderspindel (7) im Wesentlichen quer zu dieser hineinreichend angeordnet.

## Beschreibung

Die Erfindung betrifft eine Instantpulverfördervorrichtung eines Getränkezubereitungsgeräts nach dem Oberbegriff des Anspruchs 1.

In bekannten Getränkezubereitungsgeräten wird jeweils in einem Instantpulverbehälter Instantpulver bevorratet, welches mittels einer Fördervorrichtung einer Brüh- bzw. Misch- oder Zubereitungsanordnung zugeführt wird. Die Fördervorrichtung besteht insbesondere aus einer in einem unteren Bereich des Instantpulverbehälters angeordneten Förderschnecke oder Draht-Förderspindel, die geeignet ist, kleinere Menge Instantpulver genau zu dosieren. Da die Rieselfähigkeit des Instantpulvers in dem Instantpulverbehälter insbesondere durch Dampf oder Luftfeuchtigkeit beeinträchtigt sein kann, was zu einer sogenannten Brückenbildung des Instantpulvers führt, bei der das Instantpulver nicht mehr ohne weiteres rieselfähig ist, kann auch die Förderfunktion der Draht-Förderspindel oder Förderschnecke herabgesetzt oder unterbrochen sein. Insbesondere kann die Draht-Förderspindel oder Förderschnecke in dem Pulvervorrat einen, etwa ihrem Durchmesser entsprechenden, Tunnel ausreiben, wonach keine Förderung mehr erfolgt. Dies gilt insbesondere bei dampferzeugenden Getränkezubereitungsgeräten, bei denen der Dampf an einem Ende der Draht-Förderspindel oder Förderschnecke durch eine Auslauföffnung für das Instantpulver in den Instantpulverbehälter gelangen kann. Um die Förderwirkung der Draht-Förderspindel oder Förderschnecke möglichst nicht zu beeinträchtigen, sind bereits Mittel zum Auflockern des Instantpulvers in dem Instantpulverbehälter bekannt.

So werden in der Nahrungsmittelindustrie, in der feines Pulver aus einem meist konischen oder trapezförmiger Behälter durch einen in dessen unteren Bereich horizontal angeordneten Schneckenförderer gefördert bzw. dosiert wird, Rührwerke und/oder Vibratoren oder auch Paddel, Schlagbolzen, Luftkissen, Gleitbeschichtungen vollständig oberhalb des Schneckenförderers eingesetzt, um das Pulver bis zu einem Einlauf des Schneckenförderers zu bringen (EP-A 1 916 207). Diese Massnahmen erfordern jedoch einen erheblichen technischen Aufwand insbesondere durch die Antriebe der Rührwerke, Vibratoren, Paddel, Schlagbolzen und/oder sind nicht ausreichend wirksam, so dass sie für Haushaltszubereitungsgeräte oder halbprofessionelle Anwendungen kaum in Betracht zu ziehen sind.

Der vorliegenden Erfindung liegt somit die Aufgabe zugrunde, eine Instantpulverfördervorrichtung eines Getränkezubereitungsgeräts der eingangs genannten Gattung mit Mitteln zum Auflockern des Instantpulvers in dem Instantpulverbehälter, und zwar in dem Wirkungsbereich der Draht-Förderspindel oder Förderschnecke zu versehen, die zuverlässig zum Auflockern eines durch Feuchtigkeit in seiner Rieselfähigkeit beeinträchtigten Instantpulvers wirksam sind, jedoch nur wenige unkomplizierte Teile und insbesondere keine separaten Antriebe erfordert.

Diese Aufgabe wird durch die Instantpulverfördervorrichtung mit den in Anspruch 1 angegebenen Merkmalen gelöst.

Das erfindungsgemäß in dem Instantpulverbehälter vorgesehene, in axialer Richtung der Draht-Förderspindel oder Förderschnecke elastisch verstellbare und in die Draht-Förderspindel oder Förderschnecke im wesentlichen quer zu dieser hineinreichende Schlagelement erfordert keinen separaten Antrieb. Es wird durch die Draht-Förderspindel oder Förderschnecke selbst angetrieben, und zwar über einen Verstellweg, an dessen Ende das Schlagelement aus der Draht-Förderspindel oder Förderschnecke herausspringt und infolge der elastischen Verstellbarkeit zurückschnellt, dabei das Instantpulver so bewegt bzw. durch das anstoßende Schlagelement löst, dass das Instantpulver in die im wesentlichen horizontal angeordnete Draht-Förderspindel oder Förderschnecke gelangt und mittels dieser horizontal gefördert wird. Durch die elastische Rückstellung kann das Schlagelement, wenn es nicht an verfestigtes Instantpulver anstößt, an eine Flanke der Draht-Förderspindel oder Förderschnecke anschlagen, die der Flanke folgt, aus dem das Schlagelement herausgeglitten ist. Bei dem Zurückschnellen des Schlagelements wird das Pulver insbesondere zwischen den beiden genannten Flanken, aber auch außerhalb dieses Bereichs der Draht-Förderspindel oder Förderschnecke durch das Schlagelement bewegt. Bei dem Anschlag auf die Draht-Förderspindel oder Förderschnecke kann der Stoß über die Draht-Förderspindel oder Förderschnecke auf das sie umgebende Instantpulver übertragen werden und eine Brückenbildung des Instantpulvers verhindern.

Zum Beispiel sind das Schlagelement und die Draht-Förderspindel oder die Förderschnecke so angeordnet bzw. bemessen, dass das Schlagelement jeweils nach einer Umdrehung der Draht-Förderspindel oder Förderschnecke aus dieser heraus gleitet und an deren nächste Flanke springt. Dieser Sprung kann jedoch je nach Anordnung und Bemessung der oben genannten Teile auch bei jeweils nur einer Teilumdrehung erfolgen, was einen relativ geringeren, gleichmäßigeren Verschleiß ermöglichen kann.

Die Wirkung des elastisch verstellbaren Schlagelements ist um so größer, je größer die Steigung bzw. der Gang der Draht-Förderspindel oder Förderschnecke ist.

Gemäß Anspruch 2 ist das Schlagelement außerhalb der Draht-Förderspindel oder Förderschnecke bevorzugt oberhalb der Draht-Förderspindel oder Förderschnecke an einer Aufhängung angebracht, wobei eine Rückstellfeder einerseits mit der Aufhängung und andererseits mit dem Schlagelement verbunden ist. Die Aufhängung kann dabei an einer besonderen Aufhängevorrichtung oder aber auch an einem Instantpulverbehälterdeckel erfolgen. In beiden Fällen ist die Anordnung unkompliziert und gewährleistet eine zuverlässige Funktion des Schlagelements.

Besonders einfach ist gemäß Anspruch 3 das Schlagelement über eine Blattfeder als Rückstellfeder mit der Aufhängung verbunden. Die Blattfeder dient somit zur Anbringung des Schlagelements an der Aufhängung und zur elastischen Verstellbarkeit des Schlagelements.

Bevorzugt weist das Schlagelement nach Anspruch 4 eine im wesentlichen quer zu der axialen Richtung der Draht-Förderspindel oder Förderschnecke angeordnete Schlagfläche auf. Die Schlagfläche vergrößert den Einwirkungsbereich des Schlagelements auf das Instantpulver. Weiterhin kann die Schlagfläche des Schlagelements zur Verschleißminderung nach Anspruch 5 um den Steigungswinkel der Draht-Förderspindel oder Förderschnecke gegen deren Normal- Querschnittsfläche, die rechtwinklig zu der Achse der Draht-Förderspindel oder Förderschnecke gedacht ist, geneigt sein.

Weiterhin bevorzugt ist die Schlagfläche des Schlagelements gemäß Anspruch 6 an den Querschnitt des Bodenbereichs des Instantpulverbehälters angepasst, jedoch ungehindert durch den Bodenbereich beweglich, um großflächig auf das Instantpulver einzuwirken.

Um über eine größere axiale Erstreckung der Draht-Förderspindel oder Förderschnecke zum Lockern des Instantpulvers wirksam zu sein, sind gemäß Anspruch 7 mehrere Schlagelemente in axialer Richtung der Draht-Förderspindel oder Förderschnecke versetzt angeordnet.

Ein Ausführungsbeispiel der Erfindung wird im Folgenden anhand einer Zeichnung mit vier Figuren beschrieben, in der eine Draht-Förderspindel vereinfacht dargestellt ist und aus der sich weitere vorteilhafte Einzelheiten ergeben können. Es zeigt:
- Fig.1: eine Instantpulverfördervorrichtung eines Getränkezubereitungs- geräts in einem Längsschnitt mit zwei Schlagelementen in einer ersten Position der Schlagelemente,
- Fig. 2: die Instantpulverfördervorrichtung gemäß Figur 1, jedoch in einer zweiten Position der Schlagelemente,
- Fig. 3: einen Querschnitt durch die Instantpulvervorrichtung gemäß Figur 1 in der Schnittebene B-B und
- Fig. 4: einen Querschnitt durch die Instantpulvervorrichtung gemäß Figur 1 in der Schnittebene C-C.

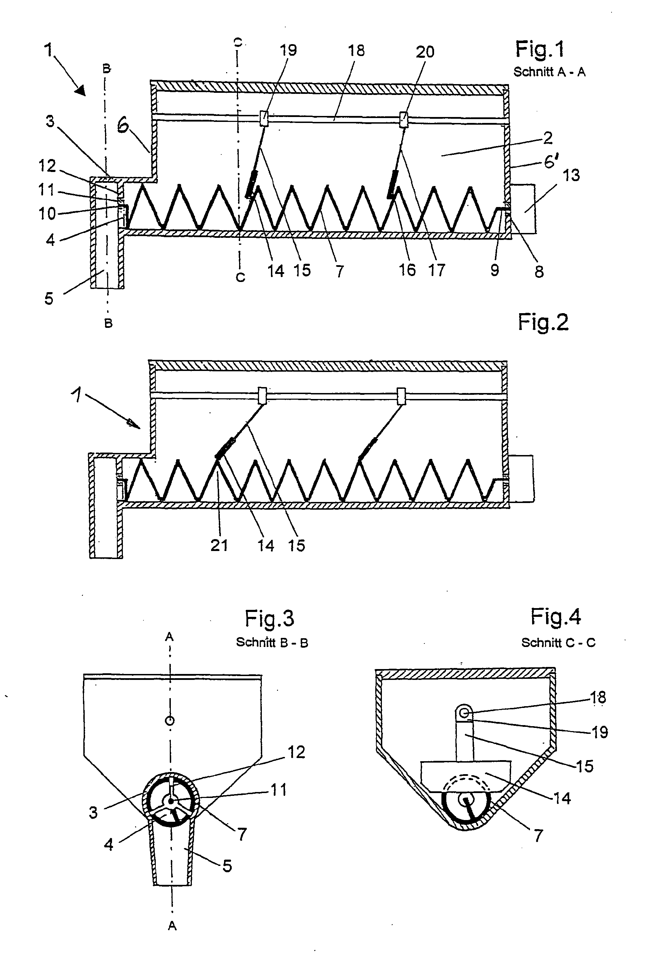

In den Figuren 1 und 2 ist eine Instantpulverfördervorrichtung allgemein mit 1 bezeichnet, die einen Instantpulverbehälter 2 zur Bevorratung von Instantpulver aufweist. An dem nicht bezeichneten rinnenförmigen Bodenbereich des Instantpulverbehälters mündet dieser in einen Auslaufzylinder 3, und zwar an einer Stirnwand 6 des Instantpulverbehälters 2, der eine Rückwand 6' gegenüber liegt. Über eine Auslauföffnung 4 steht der Auslaufzylinder mit einer senkrecht angeordneten Auslaufschnaupe 5 in Verbindung, die zu einer nicht dargestellten Brüh- bzw. Misch- oder Zubereitungsanordnung führt.

In den Auslaufzylinder 3 ragt ein Ende einer in dem Bodenbereich des Instantpulverbehälters horizontal angeordneten Draht-Förderspindel 7, die an einem Ende in einem Förderspindelachslager 8 in der Rückwand 6' mittels eines Förderspindelantriebszapfens 9 gelagert ist. Der Förderspindelantriebszapfen 9 ist drehbar mit einem Elektromotor 13 verbunden, der an der Rückwand 6' außen angebracht ist.

An ihrem Auslaufzylinder seitigen Ende ist die Draht-Förderspindel 7 mittels eines vorderen Förderspindellagerzapfens 10 in einem vorderen Förderspindelzapfenlager 11 drehbar gelagert. Eine im einzelnen aus Figur 3 ersichtliche Förderspindelzapfenlageranbindung ist mit 12 bezeichnet.

Wie aus den Figuren 1 und 2 ersichtlich, sind zwei Schlagelemente 15 und 16, in die Draht-Förderspindel 7 eingreifend, in axialer Richtung der Draht-Förderspindel 7 versetzt, im wesentlichen über dieser angeordnet. Die axiale Richtung der Draht-Förderspindel 7 ist die Richtung deren fiktiver Mittelachse bzw. Drehachse. Die Schlagelemente 14 und 16 sind jeweils, wie aus Figur 4 ersichtlich, an den Bodenbereich des Instantpulverbehälters 2 angepasst und dort ungehindert beweglich.

Die beiden Schlagelemente 14 und 16 sind über je eine Blattfeder 15 bzw.17 mit einer Aufhängung 18 oberhalb der Drahtförderspindel 7 verbunden, und zwar mittels je einer Rückstellfederanbindung 19 bzw. 20. Die Aufhängung 18 ist an der Stirnwand 6 und der Rückwand 6' befestigt, könnte aber in einer anderen Ausführungsform auch an dem Deckel oberhalb der Aufhängung 18 angebracht sein.

Die Transportrichtung der Draht-Förderspindel 7 verläuft in dem vorliegenden Ausführungsbeispiel in den Figuren 1 und 2 der Zeichnung von rechts nach links zu der Auslauföffnung 4.

In der Situation, die in Figur 1 dargestellt ist, befinden sich die beiden Schlagelemente 14 und 16 in einer

Ausgangsposition, in der sie an je einer Flanke der Draht-Förderspindel 7 anliegen. Bei Drehung der Draht-Förderspindel 7 mittels des Elektromotors 13 gleiten sie an der Windung der Draht-Förderspindel 7 entlang, bis sie in die in Figur 2 dargestellte Rückstellposition gelangen, die für das Schlagelement 14 mit 21 bezeichnet ist. In der Rückstellposition rutschen sie bei weiterer Drehung der Draht-Förderspindel 7 jeweils unter der Wirkung der Rückstellfedern 15, 16 über die Flanke der Draht-Förderspindel hinweg, an der sie anlagen, und schnellen unter Auflockerung des Instantpulvers in die in Figur 1 dargestellte Ausgangsposition zurück, in der sie jeweils wieder an einer Flanke der Draht-Förderspindel 7 anliegen, um erneut in Transportrichtung mitgenommen zu werden. Wenn die Schlagelemente 14, 16 während des Zurückschnellens auf Widerstand stoßen, sei es auf geklumptes Instantpulver oder die nachfolgende Flanke der Draht-Förderspindel, wirken sie mit ihrem Stoß effektiv auf den Widerstand ein. Demzufolge wird das Instantpulver entweder direkt oder mittelbar über die Draht-Förderspindel 7 wirksam gelockert und mittels der Draht-Förderspindel 7 störungsfrei zu der Auslauföffnung 4 transportiert.

### Bezugszahlen

- 1: Instantpulverfördervorrichtung
- 2: Instantpulverbehälter
- 3: Auslaufzylinder
- 4: Auslauföffnung
- 5: Auslaufschnaupe
- 6: Stirnwand
- 6': Rückwand
- 7: Draht-Förderspindel
- 8: Förderspindelachslager
- 9: Förderspindelantriebszapfen
- 10: vorderer Förderspindellagerzapfen
- 11: vorderes Förderspindelzapfenlager
- 12: Förderspindelzapfenlageranbindung
- 13: Motor
- 14: Schlagelement
- 15: Rückstellfeder
- 16: Schlagelement
- 17: Rückstellfeder
- 18: Aufhängung
- 19: Rückstellfederanbindung
- 20: Rückstellfederanbindung
- 21: Schlagelement-Rückstellposition

## Patentansprüche

1. Instantpulverfördervorrichtung eines Getränkezubereitungsgeräts, mit einer in einem Bodenbereich des Instantpulverbehälters (2) drehbar angeordneten Draht-Förderspindel oder Förderschnecke, an deren Ende eine Auslauföffnung (4) angeordnet ist, sowie mit Mitteln zum Auflockern des Instantpulvers in dem Instantpulverbehälter (2),
**dadurch gekennzeichnet,**
**dass** in dem Instantpulverbehälter (2) mindestens ein Schlagelement (14, 16) in axialer Richtung der Draht-Förderspindel (7) oder Förderschnecke elastisch verstellbar und in die Draht-Förderspindel (7) oder Förderschnecke im wesentlichen quer zu dieser hineinreichend angeordnet ist.

2. Instantpulverfördervorrichtung nach Anspruch 1,
**dadurch gekennzeichnet,**
**dass** das Schlagelement (14, 16) außerhalb der Draht-Förderspindel (7) oder Förderschnecke bevorzugt oberhalb an einer Aufhängung (18) angebracht ist und dass eine Rückstellfeder (15, 17) einerseits mit der Aufhängung (18) und andererseits mit dem Schlagelement (14, 16) verbunden ist.

3. Instantpulverfördervorrichtung nach Anspruch 2,
**dadurch gekennzeichnet,**
**dass** das Schlagelement (14, 16) über eine Blattfeder (15, 17) als Rückstellfeder mit der Aufhängung (18) verbunden ist.

4. Instantpulverfördervorrichtung nach einem der Ansprüche 1-3,
**dadurch gekennzeichnet,**
**dass** das Schlagelement (14, 16) eine im wesentlichen quer zu der axialen Richtung der Draht-Förderspindel (7) oder Förderschnecke angeordnete Schlagfläche aufweist.

5. Instantpulverfördervorrichtung nach einem der vorangehenden Ansprüche,
**dadurch gekennzeichnet,**
**dass** die Schlagfläche um den Steigungswinkel der Draht-Förderspindel (7) oder Förderschnecke zu deren Normal-Querschnittsfläche geneigt angeordnet ist.

6. Instantpulverfördervorrichtung nach einem der vorangehenden Ansprüche,
**dadurch gekennzeichnet,**
**dass** die Schlagfläche an die Form des Bodenbereichs des Instantpulverbehälters (2) angepasst ist.

7. Instantpulverfördervorrichtung nach einem der vorangehenden Ansprüche,
**dadurch gekennzeichnet,**
**dass** mehrere Schlagelemente (14, 16) in axialer Richtung der Draht-Förderspindel (7) oder Förderschnecke versetzt angeordnet sind.
